# EUROPEAN PATENT SPECIFICATION

(11) **EP 3 630 557 B1**
(45) Date of publication and mention of the grant of the patent: **08.09.2021**
(21) Application number: 17726616.0
(22) Date of filing: 29.05.2017
(51) Int. Cl.: B60S 1/40, B60S 1/38

(54) **WINDSCREEN WIPER DEVICE**
SCHEIBENWISCHERVORRICHTUNG
DISPOSITIF D'ESSUIE-GLACE

(43) Date of publication of application: 08.04.2020
(73) Proprietor: Trico Belgium S.A., 6790 Aubange (BE)
(72) Inventor: BOLAND, Xavier, 6700 Arlon (BE)
(74) Representative: Hooiveld, Arjen Jan Winfried
(86) International application number: PCT/EP2017/062918
(87) International publication number: WO 2018/219427

(56) References cited:
- WO-A1-2011/026507
- WO-A1-2012/103944
- US-A1- 2015 166 016

## Description

The present invention relates to a windscreen wiper device of the "flat blade type" comprising an elastic , elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for a oscillating arm comprising two longitudinal arm sections connected to each other by means of a curved intermediate section, wherein said oscillating arm can be pivotally connected to said connecting device about a pivot axis.

A windscreen wiper device of the "flat blade type" is generally known. In such a windscreen wiper device of the "flat blade type" no use is made of several yokes pivotally connected to each other, but wherein the wiper blade is biased by the carrier element, as a result of which it exhibits a specific curvature. In practice, due to high forces exerted on the connection between the connecting device and the oscillating arm, the reliability of said connection appears to diminish in time. Therefore, there is a need to improve said connection on the one hand, but to ensure an easy disconnection on the other hand, particularly in case of repair or replacement of said wiper blade.

The object of the invention is to provide an improved windscreen wiper device of the "flat blade type", wherein no use is made of several yokes pivotally connected to each other, but wherein the wiper blade is biased by the carrier element, as a result of which it exhibits a specific curvature.

In order to accomplish that objective, a windscreen wiper device of the type referred to in the introduction is characterized according to the invention in that said connecting device comprises a first part and a second part, said second part having an at least substantially U-shaped cross-section with a base and resilient legs, wherein said second part is pivotally connected to said first part about said pivot axis between a first position, wherein said legs of said U-shaped cross-section are blocked by said first part to bend laterally outwardly in order to retain said second part onto said oscillating arm, and a second position, wherein said legs of said U-shaped cross-section are allowed to bend laterally outwardly in order to release said second part from said oscillating arm, wherein said legs of said U-shaped cross-section each comprise a laterally inwardly extending protrusion to block a longitudinal movement of said connecting device away from said oscillating arm in said first position. In other words, in the first position being the wiping position, wherein the wiper blade is able to carry out its oscillatory movement on a windscreen to be wiped, the oscillating arm and a unit consisting of the connecting device and the wiper blade, are firmly interconnected, wherein the legs of the U-shaped cross-section of the second part are prevented by said first part to bend laterally outwardly. Hence, in this wiping position these legs of the U-shaped cross-section are not allowed, i.e. prevented, to plastically or elastically deform. However, in the second position being the service position, wherein the oscillating arm is in an upright position relative to a windscreen to be wiped, the unit consisting of the connecting device and the wiper blade can easily disconnected for repair of replacement. Hence, in this service position these legs of the U-shaped cross-section are allowed to plastically or elastically deform in a lateral and outward direction. The base and the legs of the U-shaped cross-section of the second part of the connecting device are arranged to accommodate the oscillating arm. In use one of the longitudinal arm sections thereof is positioned on top of the base and between the legs of the U-shaped cross-section, preferably in a form closing manner. The other of the longitudinal arm sections of the oscillating arm in use is also positioned between the legs of the U-shaped cross-section. In use the curved intermediate section of the oscillating arm interconnecting both longitudinal arms sections thereof is guided around the base of the U-shaped cross-section of the second part of the connecting device.

It is noted that the present invention is not restricted to cars, but also refers to rail coaches and other (fast) vehicles.

It is noted that the present invention is not restricted to the use of only one longitudinal strip forming the elastic carrier element that is particularly located in a central longitudinal groove of the wiper blade. Instead, said carrier element may also comprise two longitudinal strips, wherein said strips are disposed in opposite longitudinal grooves of the wiper blade. Said groove (s) may be closed at one outer end.

Further, it is noted that in the invention use is made of a mounting head fixed for rotation to a shaft, wherein said shaft is rotatable alternately in a clockwise and in a counter-clockwise sense carrying said mounting head into rotation. Thus, in turn said mounting head draws said connecting device into rotation and thereby moves said wiper blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head.

In the framework of the present invention the following is noted. Said connecting device, also called "connector", is preferably made of plastic. The wiper blade being preferably made of an elastomer material, such as rubber, is particularly made through extrusion. Particularly, said wiper blade comprises a spoiler at a side thereof facing away from the windscreen to be wiped, wherein said wiper blade and said spoiler are preferably made in one piece. Said longitudinal groove is preferably a central longitudinal groove accommodating said longitudinal strip. Said longitudinal strip is also called a "flexor". Said first part of said connecting device is preferably fixedly connected to the longitudinal strip(s) particularly through a welding, brazing ("soldering"), gluing or clamping operation or with the help of a pin inserted through said connecting device and said longitudinal strip(s). In the alternative or in addition thereto, said first part of said connecting device is clamped onto the flexible material of the wiper blade, particularly in case the latter is equipped with a central longitudinal groove for the carrier element. Said second part acts as a joint part interposed between said first part and said oscillating arm. All the above preferred features of the present invention can be used alone or in combination with any other feature(s), as a skilled person would appreciate.

Said first and second parts are preferably detachably interconnected by snapping, that is clipping said second part onto said first part.

Preferably, said second part is positioned inside said first part at the location of their interconnection. More preferably, said second part is entirely received inside said first part. In a preferred embodiment said second part comprises two protuberances extending outwardly on either side of said second part, wherein said protuberances pivotally engage into correspondingly shaped recesses of said first part. Said protuberances are preferably cylindrical in shape.

In one preferred embodiment of a windscreen wiper device in accordance with the invention in said first position said legs of said U-shaped cross-section face respective side walls of said first part, wherein said side walls of said first part block a lateral outward bending of said legs of said U-shaped cross section in order to retain said second part onto said oscillating arm. As indicated, said legs of said U-shaped cross-section each comprise a laterally inwardly extending protrusion to block a longitudinal movement of a unit consisting of said first part, said second part and said wiper blade away from oscillating arm in said first position.

In another preferred embodiment of a windscreen wiper device according to the invention in said first position said base of said U-shaped cross-section encloses an acute angle with the wiper blade. Particularly, in said first position a front part of said second part is facing towards a windscreen to be wiped. Said front part forms a nose of said second part and in use is facing away from a mounting head drawing the connecting device into rotation and thereby moving the wiper blade.

In another preferred embodiment of a windscreen wiper device in accordance with the invention in said second position said base of said U-shaped cross-section encloses an acute angle with the wiper blade. Particularly, in said second position said front part of said second part is facing away from a windscreen to be wiped.

International patent publication no. WO2011/026507 discloses a windscreen wiper device according to the preamble of claim 1.

The invention will now be explained in more detail with reference to figures illustrated in a drawing, wherein:

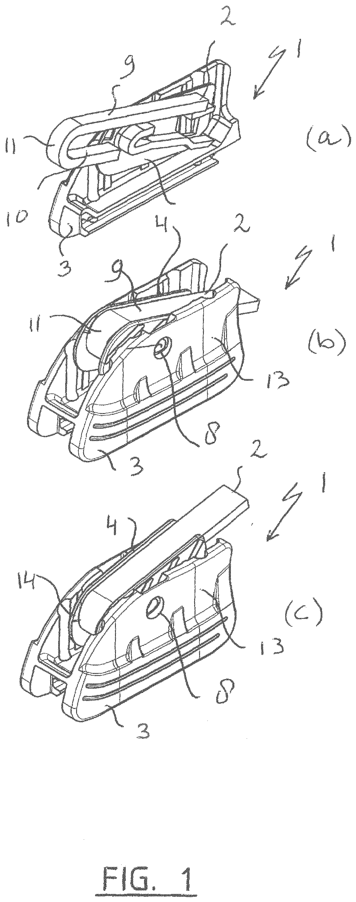

- Figures 1a, 1b, 1c are a perspective , schematic view of a connecting device arranged to be used in windscreen wiper device of the "flat blade type" according to a preferred embodiment of the invention, together with a hook-shaped oscillating arm, in a service position (a), wherein the connecting device is in the process of being mounted on the oscillating arm (seen in cross-section), in a service position (b), wherein the connecting device is finally mounted on the oscillating arm, but unlocked, and in a wiping position (c), wherein the connecting device is mounted on the oscillating arm, but locked;
- Figure 2 shows a second part of the connecting device of figure 1 in a perspective, schematic view (a) and in a side view (b), as well as a side view of a first part of the connecting device of figure 1 (c);
- Figures 3a, 3b and 3c are a perspective, schematic view of the first part and the second part of the connecting device of figure 1, assembled together, in a neutral position (a), in a service position (b) and in a wiping position (c), wherein figures 3b and 3c correspond to figures 1b and 1c, but without the oscillating arm, respectively; and
- Figure 4 shows a windscreen wiper device of the flat blade type equipped with a connecting device of figures 1, 2 and 3.

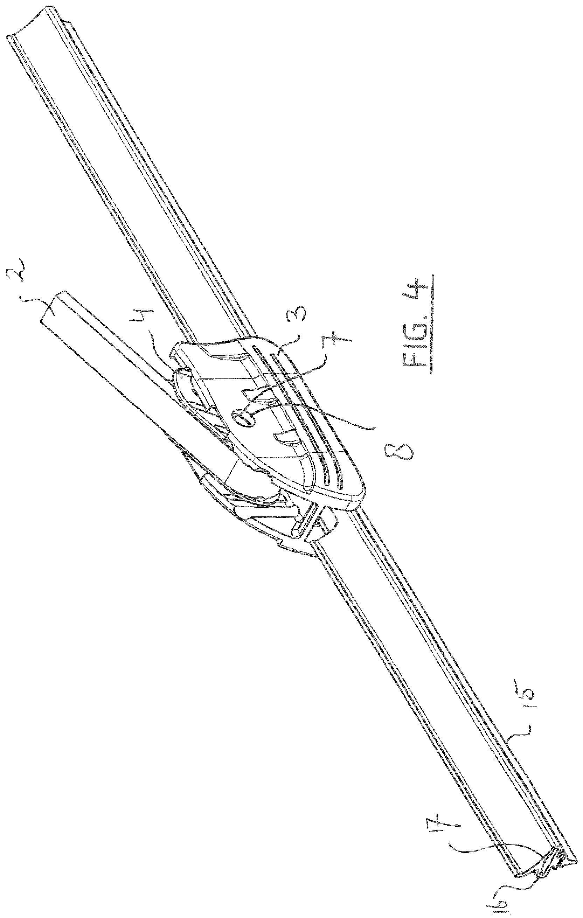

Figures 1, 2 and 3 show a connecting device 1 in a preferred embodiment according to the invention arranged to be used in a windscreen wiper device of the "flat blade type" shown in figure 4. Such a windscreen wiper device of the flat blade type is, for example, described in depth in European patent publication no. 1 568 559, which is hereby incorporated by reference. Said windscreen wiper device is usually built up of an elastomeric wiper blade 15, comprising a central longitudinal groove 16, for example. A longitudinal strip 17 made of spring band steel, is fitted in said longitudinal groove. Said strip 17 forms a flexible carrier element for the wiper blade 15, as it were, which is thus biased in a curved position (the curvature in operative position being that of a windscreen to be wiped). Ends of the strip/wiper blade may be connected on either side of the windscreen wiper device to a connecting piece functioning as clamping members. The connecting pieces could be separate constructional elements, which may be form-locked ("positive locking" or "having a positive fit") or force-locked to the ends of the strip/wiper blade. In another embodiment, said connecting pieces are in one piece with the strip made of spring band steel.

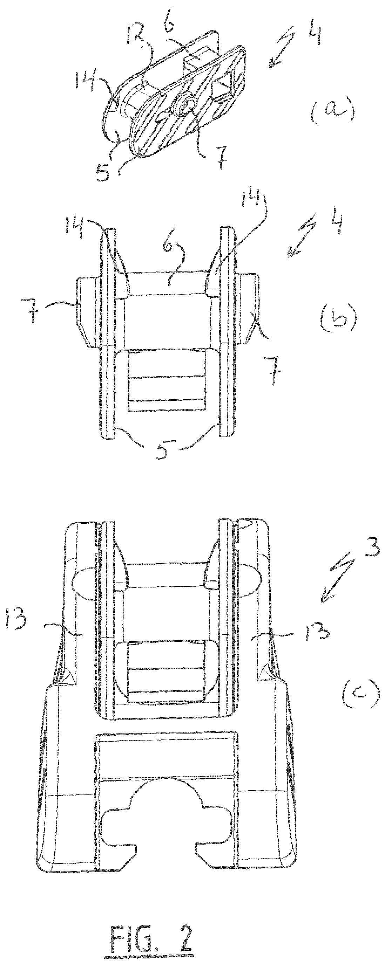

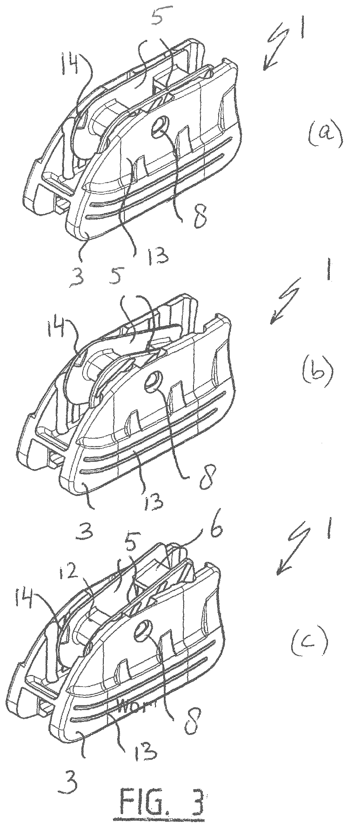

The windscreen wiper device is furthermore built up of the connecting device 1 of plastic material for a hook-shaped oscillating arm 2. Alternatively, the connecting device 1 may also be made of metal, such as steel or aluminum. With reference to figures 1, 2 and 3, said connecting device 1 consists of a first part 3 and a second part 4 interconnected through a snapping operation. In other words, said first and second parts 3,4 are preferably detachably interconnected by snapping, that is clipping said second part 4 onto said first part 3. Said first part 3 of said connecting device 1 acts as a base part, wherein said first part 3 is preferably fixedly connected to the longitudinal strip(s) through a welding, brazing ("soldering"), gluing or clamping operation. In the alternative or in addition thereto, said first part 3 is clamped onto the flexible material of the wiper blade, particularly in case the latter is equipped with a central longitudinal groove for the carrier element. Said second part 4 acts as a joint part interposed between said first part 3 and said oscillating arm 2. As depicted in figures 1 and 3, said second part 4 is entirely positioned inside said first part 3. Said second part 4 has a U-shaped cross-section having legs 5 and a base 6 between them (figure 2a). As depicted in figure 2a, said second part 4 comprises two protuberances 7 extending laterally outwardly on either leg 5 of said second part 4, wherein said protuberances 7 pivotally engage into correspondingly shaped recesses 8 of said first part 3 (figures 1b and 1c, as well as figures 3b and 3c). Said protuberances 7 are preferably cylindrical in shape. The oscillating arm 2 is pivotally connected to said connecting device 1 about a pivot axis near one end, as will be described hereunder. As can be seen from figure 1, said oscillating arm 2 includes two parallel longitudinal arm sections 9,10 connected to each other by means of a curved intermediate section 11, wherein the sections 9, 10, 11 are in one piece.

Figure 1 shows stepwise how a unit consisting of the connecting device 1 and the wiper blade is mounted onto the hook-shaped oscillating arm 2. First of all, the oscillating arm 2 is positioned in its service position, wherein the oscillating arm 2 is in an upright position relative to a windscreen to be wiped, so that the wiper blade can be repaired or replaced (figure 1a). In this service position the second part 4 is pivoted relative to the first part 3 of the connecting device 1, wherein a front part or nose 12 of the second part 4 is directed in an upward direction relative to the first part 3. In this latter position the legs 5 of the U-shaped cross-section of the second part 4 are able to bend laterally outwardly, under plastic or elastic deformation, so that the second part 4(and the first part 3 and the wiper blade connected thereto) can be easily slid onto the oscillating arm 2 (figures 1a and 1b). Subsequently, the oscillating arm 2 is positioned in its wiping position, wherein the wiper blade is able to carry out its oscillatory movement along a windscreen to be wiped. In this wiping position the second part 4 is pivoted back relative to the first part 3 of the connecting device 1, wherein the front part or nose 12 of the second part 4 is directed in a downward direction relative to the first part 3. In this latter position the legs 5 of the U-shaped cross-section of the second part 4 face adjacent side walls 13 of the first part 3 of the connecting device 1 (figure 1c) Said side walls 13 of said first part 3 block a lateral outward bending of said legs 5 of said U-shaped cross-section in order to retain said oscillating arm 2 onto said second part 4. Particularly, said legs 5 of said U-shaped cross-section each comprise a laterally inwardly extending protrusion 14 to block a longitudinal movement of said connecting device 1 (and the wiper blade attached thereto) away from said oscillating arm 2 in said wiping position.

Figure 2 shows the second part 4 of the connecting device 1 of figure 1 in a perspective, schematic view (a) and in a side view (b), as well as a side view of the first part 3 of the connecting device of figure 1(c).

Figures 3a, 3b and 3c are a perspective, schematic view of the first part 3 and the second part 4 of the connecting device 1 of figure 1, assembled together, in a neutral position (a), in a service position (b) and in a wiping position (c), but without the oscillating arm 2. Figures 3b and 3c correspond to figures 1b and 1c, respectively, wherein corresponding parts have been designated with the same reference numerals.

Possibly, a spoiler is furthermore present being made in one piece with said wiper blade 2.

The invention is not restricted to the variants shown in the drawing, but it also extends to other embodiments that fall within the scope of the appended claims.

## Claims

1. A windscreen wiper device of the "flat blade type" comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device (1) for an oscillating arm (2) comprising two longitudinal arm sections (9, 10) connected to each other by means of a curved intermediate section (11), wherein said oscillating arm (2) can be pivotally connected to said connecting device (1) about a pivot axis, **characterized in that** said connecting device (1) comprises a first part (3) and a second part (4), said second part (4) having an at least substantially U-shaped cross-section with a base (6) and resilient legs (5), wherein said second part (4) is pivotally connected to said first part (3) about said pivot axis between a first position, wherein said legs (5) of said U-shaped cross-section are blocked by said first part (3) to bend laterally outwardly in order to retain said second part (4) onto said oscillating arm (2), and a second position, wherein said legs (5) of said U-shaped cross-section are allowed to bend laterally outwardly in order to release said second part (4) from said oscillating arm (2) wherein said legs (5) of said U-shaped cross-section each comprise a laterally inwardly extending protrusion (14) to block a longitudinal movement of said connecting device (1) away from said oscillating arm (2) in said first position.

2. A windscreen wiper device according to claim 1, wherein in said first position said legs (5) of said U-shaped cross-section face respective side walls (13) of said first part (3), and wherein said side walls (13) of said first part (3) block a lateral outward bending of said legs (5) of said U-shaped cross section in order to retain said second part (4) onto said oscillating arm (2).

3. A windscreen wiper device according to claim 1 or 2, wherein in said first position said base (6) of said U-shaped cross-section encloses an acute angle with the wiper blade.

4. A windscreen wiper device according to claim 1, 2 or 3, wherein in said first position a front part (12) of said second part (4) is facing towards a windscreen to be wiped.

5. A windscreen wiper device according to any of the preceding claims 1 through 4, wherein in said second position said base (6) of said U-shaped cross-section encloses an acute angle with the wiper blade (2).

6. A windscreen wiper device according to any of the preceding claims 1 through 5, wherein in said second position a front part (12) of said second part (4) is facing away from a windscreen to be wiped.

7. A windscreen wiper device according to any of the preceding claims 1 through 6, wherein said second part (4) is positioned inside said first part (3) at the location of their interconnection.

8. A windscreen wiper device according to any of the preceding claims 1 through 7, wherein said second part (4) comprises two protuberances (7) extending outwardly on either side of said second part (4), and wherein said protuberances (7) pivotally engage into correspondingly shaped recesses (8) of said first part (3) .

9. A windscreen wiper device according to claim 8, wherein said protuberances (7) are cylindrical in shape.

10. A windscreen wiper device according to any of the preceding claims 1 through 9, wherein said first part (3) is connected to said strip.

11. A windscreen wiper device according to any of the preceding claims 1 through 10, wherein said first part (3) is connected to the flexible material of said wiper blade.

12. A windscreen wiper device according to any of the preceding claims 1 through 11, wherein said first part (3) and said second part (4) are interconnected through a snapping operation.

## Patentansprüche

1. Scheibenwischervorrichtung des "Flachblatttyps", umfassend ein elastisches, langgestrecktes Trägerelement sowie ein langgestrecktes Wischerblatt aus einem flexiblen Material, das mit einer zu wischenden Scheibe in Anlage gebracht werden kann, wobei das Wischerblatt wenigstens eine längslaufende Nut einschließt, in der ein längslaufender Streifen des Trägerelements angeordnet ist, wobei die Scheibenwischervorrichtung eine Verbindungsvorrichtung (1) für einen oszillierenden Arm (2) umfasst, umfassend zwei längslaufende Armabschnitte (9, 10), die mit Hilfe eines gekrümmten Zwischenabschnitts (11) miteinander verbundenen sind, wobei der oszillierende Arm (2) schwenkbar um eine Schwenkachse mit der Verbindungsvorrichtung (1) verbunden werden kann, **gekennzeichnet dadurch, dass** die Verbindungsvorrichtung (1) ein erstes Teil (3) und ein zweites Teil (4) umfasst, wobei das zweite Teil (4) einen wenigstens im Wesentlichen U-förmigen Querschnitt mit einer Basis (6) und federnde Schenkel (5) aufweist, wobei das zweite Teil (4) schwenkbar um die Schwenkachse mit dem ersten Teil (3) verbunden ist zwischen einer ersten Position, wobei die Schenkel (5) des U-förmigen Querschnitts durch das erste Teil (3) blockiert werden, sich seitlich nach außen zu biegen, um das zweite Teil (4) auf dem oszillierenden Arm (2) zu sichern, und einer zweiten Position, wobei die Schenkel (5) des U-förmigen Querschnitts seitlich nach außen gebogen werden dürfen, um das zweite Teil (4) von dem oszillierenden Arm zu lösen, wobei die Schenkel (5) des U-förmigen Querschnitts jeweils einen sich seitlich nach innen erstreckenden Vorsprung (14) aufweisen, um eine längslaufende Bewegung der Verbindungsvorrichtung (1) weg von dem oszillierenden Arm (2) in der ersten Position zu blockieren.

2. Scheibenwischervorrichtung nach Anspruch 1, wobei die Schenkel (5) des U-förmigen Querschnitts in der ersten Position jeweiligen Seitenwänden (13) des ersten Teils (3) zugewandt sind, und wobei die Seitenwände (13) des ersten Teils (3) ein seitliches Nach-Außen-Biegen der Schenkel (5) des U-förmigen Querschnitts blockieren, um das zweite Teil (4) auf dem oszillierenden Arm (2) zu sichern.

3. Scheibenwischervorrichtung nach Anspruch 1 oder 2, wobei die Basis (6) des U-förmigen Querschnitts in der ersten Position einen spitzen Winkel mit dem Wischerblatt einschließt.

4. Scheibenwischervorrichtung nach Anspruch 1, 2 oder 3, wobei ein Vorderteil (12) des zweiten Teils (4) in der ersten Position in Richtung einer zu wischenden Windschutzscheibe zugewandt ist.

5. Scheibenwischervorrichtung nach einem der vorhergehenden Ansprüche 1 bis 4, wobei die Basis (6) des U-förmigen Querschnitts in der zweiten Position einen spitzen Winkel mit dem Wischerblatt (2) einschließt.

6. Scheibenwischervorrichtung nach einem der vorhergehenden Ansprüche 1 bis 5, wobei ein Vorderteil (12) des zweiten Teils (4) in der zweiten Position von einer zu wischenden Windschutzscheibe abgewandt ist.

7. Scheibenwischervorrichtung nach einem der vorhergehenden Ansprüche 1 bis 6, wobei der zweite Teil (4) innerhalb des ersten Teils (3) an der Stelle ihrer Verbindung positioniert ist.

8. Scheibenwischervorrichtung nach einem der vorhergehenden Ansprüche 1 bis 7, wobei der zweite Teil (4) zwei Höcker (7) umfasst, die sich auf jeder Seite des zweiten Teils (4) nach außen erstrecken, und wobei die Höcker (7) schwenkbar in entsprechend geformte Aussparungen (8) des ersten Teils (3) eingreifen.

9. Scheibenwischervorrichtung nach Anspruch 8, wobei die Höcker (7) zylindrisch geformt sind.

10. Scheibenwischervorrichtung nach einem der vorhergehenden Ansprüche 1 bis 9, wobei der erste Teil (3) mit dem Streifen verbunden ist.

11. Scheibenwischervorrichtung nach einem der vorhergehenden Ansprüche 1 bis 10, wobei der erste Teil (3) mit dem flexiblen Material des Wischerblatts verbunden ist.

12. Scheibenwischervorrichtung nach einem der vorhergehenden Ansprüche 1 bis 11, wobei der erste Teil (3) und der zweite Teil (4) durch einen Schnappvorgang miteinander verbunden sind.

## Revendications

1. Dispositif de balai d'essuie-glace du type « à lame plate » comprenant un élément porteur allongé élastique, ainsi qu'une lame de balai allongée, réalisée dans un matériau flexible, qui peut être placée en butée contre un pare-brise à essuyer, laquelle lame de balai comprend au moins une rainure longitudinale, rainure dans laquelle est disposée une bande longitudinale de l'élément porteur, lequel dispositif de balai d'essuie-glace comprend un dispositif de connexion (1) d'un bras oscillant (2) qui comprend deux sections de bras longitudinales (9, 10) connectées l'une à l'autre au moyen d'une section intermédiaire incurvée (11), dans lequel ledit bras oscillant (2) peut être connecté de manière pivotante audit dispositif de connexion (1) autour d'un axe de pivot, **caractérisé en ce que** ledit dispositif de connexion (1) comprend une première partie (3) et une seconde partie (4), ladite seconde partie (4) présentant une section transversale sensiblement au moins en forme de U avec une base (6) et des jambes élastiques (5), dans lequel ladite seconde partie (4) est connectée de manière pivotante à ladite première partie (3) autour dudit axe de pivot, entre une première position, dans laquelle lesdites jambes (5) de ladite section transversale en forme de U sont bloquées par ladite première partie (3) afin de fléchir latéralement vers l'extérieur de manière à retenir ladite seconde partie (4) sur ledit bras oscillant (2), et une seconde position dans laquelle lesdites jambes (5) de ladite section transversale en forme de U ont la possibilité de fléchir latéralement vers l'extérieur afin de libérer ladite seconde partie (4) dudit bras oscillant (2), dans lequel chacune desdites jambes (5) de ladite section transversale en forme de U, comprend une saillie qui s'étend latéralement vers l'intérieur (14) afin de bloquer un déplacement longitudinal dudit dispositif de connexion (1) en s'éloignant dudit bras oscillant (2) dans ladite première position.

2. Dispositif de balai d'essuie-glace selon la revendication 1, dans lequel, dans ladite première position, lesdites jambes (5) de ladite section transversale en forme de U, font face à des parois latérales respectives (13) de ladite première partie (3), et dans lequel lesdites parois latérales (13) de ladite première partie (3), bloquent une flexion latérale vers l'extérieur desdites jambes (5) de ladite section transversale en forme de U, afin de retenir ladite seconde partie (4) sur ledit bras oscillant (2).

3. Dispositif de balai d'essuie-glace selon la revendication 1 ou 2, dans lequel, dans ladite première position, ladite base (6) de ladite section transversale en forme de U, fait un angle aigu avec la lame de balai.

4. Dispositif de balai d'essuie-glace selon l'une quelconque des revendications 1 à 3, dans lequel, dans ladite première position, une partie avant (12) de ladite seconde partie (4) fait face à un pare-brise à essuyer.

5. Dispositif de balai d'essuie-glace selon l'une quelconque des revendications 1 à 4, dans lequel, dans ladite seconde position, ladite base (6) de ladite section transversale en forme de U, fait un angle aigu avec la lame de balai (2).

6. Dispositif de balai d'essuie-glace selon l'une quelconque des revendications 1 à 5, dans lequel, dans ladite seconde position, une partie avant (12) de ladite seconde partie (4) fait face en s'éloignant d'un pare-brise à essuyer.

7. Dispositif de balai d'essuie-glace selon l'une quelconque des revendications 1 à 6, dans lequel ladite seconde partie (4) est positionnée à l'intérieur de ladite première partie (3) à l'emplacement de leur interconnexion.

8. Dispositif de balai d'essuie-glace selon l'une quelconque des revendications 1 à 7, dans lequel ladite seconde partie (4) comprend deux protubérances (7) qui s'étendent vers l'extérieur sur les deux côtés de ladite seconde partie (4), et dans lequel lesdites protubérances (7) viennent en prise de manière pivotante dans des renfoncements de forme correspondante (8) de ladite première partie (3).

9. Dispositif de balai d'essuie-glace selon la revendication 8, dans lequel lesdites protubérances (7) présentent une forme cylindrique.

10. Dispositif de balai d'essuie-glace selon l'une quelconque des revendications 1 à 9, dans lequel ladite première partie (3) est connectée à ladite bande.

11. Dispositif de balai d'essuie-glace selon l'une quelconque des revendications 1 à 10, dans lequel ladite première partie (3) est connectée au matériau flexible de ladite lame de balai.

12. Dispositif de balai d'essuie-glace selon l'une quelconque des revendications 1 à 11, dans lequel ladite première partie (3) et ladite seconde partie (4) sont interconnectés par une action d'encliquetage.
